# EUROPEAN PATENT SPECIFICATION

(11) **EP 2 266 115 B1**
(45) Date of publication and mention of the grant of the patent: **07.12.2011**
(21) Application number: 09734435.2
(22) Date of filing: 20.04.2009
(51) Int. Cl.: G11B 20/00, G06K 9/00, G11B 7/24, C09K 11/00, G11B 19/12, G11B 7/0045

(54) **INVISIBLE WRITING METHOD BASED ON LUMINESCENT MATERIALS LITHOGRAPHY, RELEVANT READING METHOD AND ANTI-COUNTERFEITING MARKING SYSTEM**
VERFAHREN ZUM UNSICHTBAREN SCHREIBEN AUF BASIS EINER LITHOGRAPHIE MIT LUMINESZENTEN MATERIALIEN, ENTSPRECHENDES LESEVERFAHREN UND FÄLSCHUNGSSICHERES MARKIERUNGSSYSTEM
PROCÉDÉ D'ÉCRITURE INVISIBLE BASÉ SUR LA LITHOGRAPHIE DE MATÉRIAUX LUMINESCENTS, PROCÉDÉ DE LECTURE CORRESPONDANT ET SYSTÈME DE MARQUAGE ANTI-CONTREFAÇON

(30) Priority: 23.04.2008 IT RM20080218
(43) Date of publication of application: 29.12.2010
(73) Proprietor: ENEA - ENTE PER LE NUOVE TECNOLOGIE, L'ENERGIA E L'AMBIENTE, 00196 Roma (IT)
(72) Inventor: DI LAZZARO, Paolo, I-00046 Grottaferrata (RM) (IT); BOLLANTI, Sarah, I-00178 Roma (IT); FLORA, Francesco, I-00040 Montecompatri (IT); MEZI, Luca, I-00046 Grottaferrata (RM) (IT); MURRA, Daniele, I-00155 Roma (IT); TORRE, Amalia, I-00044 Frasca (RM) (IT)
(74) Representative: Iannone, Carlo Luigi
(86) International application number: PCT/IT2009/000177
(87) International publication number: WO 2009/130733

(56) References cited:
- WO-A-98/00843
- WO-A-03/105075
- WO-A-2004/005906
- WO-A-2007/131043
- BALDACCHINI G ET AL: "Soft x-ray submicron imaging detector based on point defects in LiF" REVIEW OF SCIENTIFIC INSTRUMENTS, AIP, MELVILLE, NY, US, vol. 76, no. 11, 17 November 2005 (2005-11-17), pages 113104-113104, XP012079049 ISSN: 0034-6748
- TOMASSETTI G ET AL: "High-resolution imaging of a soft-X-ray laser beam by color centers excitation in lithium fluoride crystals" EUROPHYSICS LETTERS, INSTITUTE OF PHYSICS PUBLISHING, BRISTOL, FR, vol. 63, no. 5, 1 January 2003 (2003-01-01), pages 681-686, XP002456954 ISSN: 0295-5075
- LARCIPRETE R ET AL: "Direct writing of fluorescent patterns on LiF films by x-ray microprobe" APPLIED PHYSICS LETTERS, AIP, AMERICAN INSTITUTE OF PHYSICS, MELVILLE, NY, vol. 80, no. 20, 20 May 2002 (2002-05-20), pages 3862-3864, XP012030995 ISSN: 0003-6951
- MONTEREALI R M ET AL: "Luminescent nanostructures based on colour centres produced in LiF films by direct writing with an X-ray microprobe" PHYSICA STATUS SOLIDI (C), WILEY - VCH VERLAG, BERLIN, DE, vol. 2, no. 1, 1 January 2005 (2005-01-01), pages 298-301, XP002456953 ISSN: 1610-1634
- NICHELATTI E ET AL: "Surface generation of color centers in lithium fluoride by EUV-irradiation" JOURNAL OF NON-CRYSTALLINE SOLIDS, NORTH-HOLLAND PHYSICS PUBLISHING. AMSTERDAM, NL, vol. 351, no. 21-23, 15 July 2005 (2005-07-15), pages 1774-1779, XP004962213 ISSN: 0022-3093

## Description

The invention concerns an invisible writing method based on luminescent materials lithography, relevant reading method and anticounterfeiting marking system.

More in detail, the invention concerns a method and system based on a new anticounterfeiting technique of the so-called "watermarking" typology which utilises an invisible writing technology comprising the use of lithography on luminescent support. Electromagnetic radiation is used in the spectral range comprised between the extreme ultraviolet (EUV) and soft X-rays. It deals with a new anticounterfeiting technique, that is difficult to forge and has a security coefficient which is scalable according to the needs.

With the term "watermarking" one means the invisible (i.e. traceless) digital marking technique, used to obtain the certitude of authenticity, identification and origin of a document or object.

The most widespread application of the watermarking technology consists in the insertion in the image (mark) of series of information that are invisible to the human eye. The information can concern, for example, the producer, the proprietor of the Copyright, the transaction date, a progressive identification number, the destination.

The most common application is made for purposes of anticounterfeiting of objects (commercial, artistic objects, banknotes or payment electronic systems), or documents and optical-magnetic identity cards and/or cards for access to reserved places, or quality control and/or identification and/or traceability.

In the case of digital documents, the insertion of the mark takes place by means of a software, a hologram or a plug-in for the photo-retouching programs, which are provided by the firm that produces the watermarking, and which recognizes the most widespread image compression formats and creating a mark that is resistant to modifications made to the same image.

It is possible to apply the same technology both for digital documents, and for the paper ones, wherein it is important to certify the authenticity (identification documents, passports) or the origin (documents coming from law firms or surgeries), or finally for the labels and wrappings of any commercial product.

There exist different type of watermarking besides the one dedicated to images, that apply to video, audio documents, CD, or by means of affixing invisible marks on the product or wrapping, in such a way that the authentic content be reconstructable also by an analysis of the packaging.

Parallel to the development of watermarking systems, the forgers have refined their ability to recognize the decoding key of the digital work, and they are able to reproduce the last on documents/objects to be forged. In practice, the digital key is found by means of a suitable software for decoding images. Neither ones of the nowadays used visible and semi-visible techniques that are complementary to watermarking (fluorescent and thermo-chromatic inks, demetallisation, radio-frequency, micro-texts and holograms) offer a high difficultly of forging or imitation.

The consequence is that up till now there is no absolute certitude that the documents/objects/magnetic cards protected by watermarkings are actually original.

There exist a number of items concerning the use of luminescent supports as storage systems of images and data. On the other hand, the possibility of creating colour centres by means of irradiation of particular luminescent materials is known since several decades to the material and fluorescence experts, and since many years the creation of colour centres developed towards the writing of luminescent patterns that are suitable to store images and data.

A first example is the document US 5, 581, 499 "Micro-information storage system" filed on December 3rd 1996. In this finding, a generic ionising radiation writes drawings on a luminescent crystal of Cadmium Fluoride (CdF) creating colour centres. The information stored in the colour centres is revealed by luminescent invisible light emitted by the same colour centres excited by visible or ultraviolet light. Moreover, a suitable doping of the CdF allows the writing-reading even if using electrons beams. The applications considered in this Patent exclusively concern the writing of micrometric patterns aimed at storing information of various type.

Another pertinent document is US 6,663,960 "Fluorescent particles, method for preparing the same and paper for preventing forgery using the fluorescent particles". In this patent, a system for the realisation of fluorescent particles to be embedded on paper substrates is described, so as to allow the recognition as to whether the paper is authentic or counterfeited. This patent has an anti-counterfeiting object similar to that of the present invention, but the two techniques are totally different. The patent in question provides for the dispersion of single particles, embedded in a granular material, on the paper, and only on the paper, whose authenticity is sought to be guaranteed. In the present invention, instead, there are no fluorescent particles, but colour centres in a totally homogeneous material that is to be applied on the object to be protected (be it made by paper or any other material) and further the information inserted in the material is realised by means of a writing system totally unconnected to the cited patent.

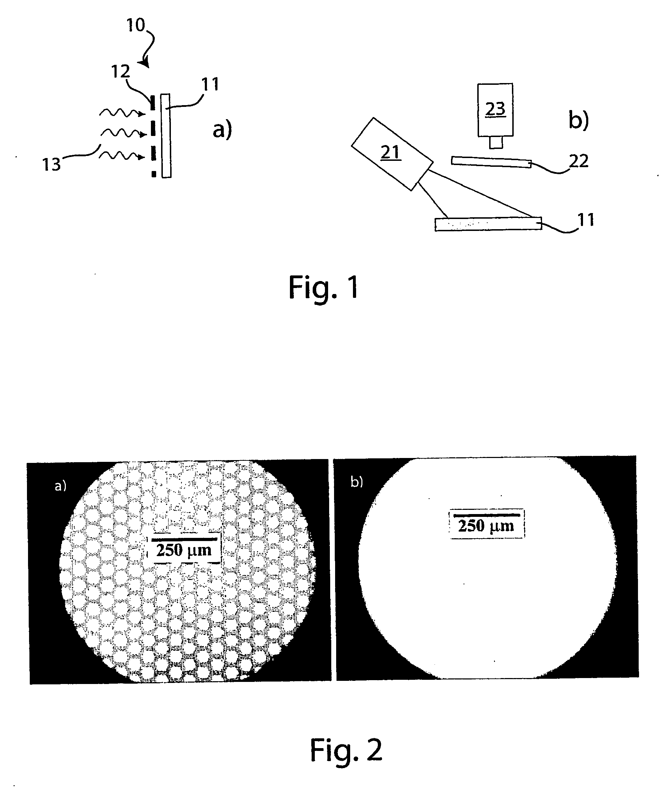

Besides, the document IT 1.337:672, with its corresponding United States patent application US 2006/0165216, "Method for the detection of micrometric and sub-micrometric images obtained by means of ionising radiations", filed on July 2nd, 2002 (also published as WO2004/005906). In this document, an experimental apparatus is used that is similar to that schematised in figure 1 for detecting images of biologic samples with high spatial resolution on Lithium Fluoride (LiF) films or crystals. The system provides for the projection of biological samples in contact with the LiF, for obtaining micro-radiographs with higher definition. The applications considered by the patent in question are limited to the x-ray microscopy of biological samples, micro-radiographs of insects and writing of sub-micrometric and micrometric patterns which are in all cases in contact with the LiF. No mention is made of the possible application as watermarking/traceless or other anticounterfeiting technique. On the other hand, in the described case, the declared aim was to see something in a better way and not to hide it, and this is reflected in the prescribed ranges of fluence or energy dose (see below in the embodiments description). Moreover, such a document does not suggest any means to recognise the creation of a faked mark made by a counterfeiter who utilises this photolithography technique to imprint the mark on a photoluminescent material. The article of Tomassetti et al.: "High-resolution imaging of a soft-X-ray laser beam by color centres excitation in lithium fluoride crystals", Europhysics Lett., Institute of Physics Publishing, Bristol, FR, Vol. 63, no. 5, 1 January 2003, pages 681-686, suffers of a similar limit: it describes how to write a faint image on a luminescent material, but it does not suggest the parameters' values such that the image would be invisible to the nacked eye; moreover, it does not allow to directly recognise a faked mark imprinted on such a luminescent material.

A proposed solution has been that of WO2007/131043, i.e. the writing of an image that is the result of a mathematical transformation, however this solution has not been very effective and successful as yet.

Document WO2008/095884, filed on 4 February 2008 and published on 14 August 2008, describes a "method for marking an item based on colour centres". Colour centres are created in LiF films by irradiation and then read with the nacked eye when illuminated with blue light and seen through an orange filter. In the embodiments description, it is only specified that ionising radiation can be generated using either Synchrotron or electronic cannon. This is reflected by the statement that an essential feature of the system is the use of an ionising radiation writing beam having a spectral energy of at least 0.4 keV. In conjuction with this energy, LiF films are used, which have a thickness comprised between 20 and 200 nm. Moreover, the pixel dimension of the mark to be written is stated to be strictly between 200 nm and 2 mm.

The Synchrotron is an exceedingly costly and bulky source of ionising radiation, not at all suitable for industrial application. Electronic cannon could be used in industry, with respect to cost, but the relevant writing process according to WO2008/095884 is exceedingly slow, as the skilled person easily understand (being LiF an isolating material, low electron beam currents, i.e. low writing velocity, must be used to avoid a beam spreading by local electric charge accumulation). Hence, both sources are not at all interesting for use on industrial scale.

EUV and soft X-rays sources as, e.g., laser-plasma or discharge-plasma seem a priori to be both well applicable in industry, because they are compact, not extremely expensive and the relevant writing process could in principle be sufficiently fast. In fact, these sources typically emit a wide cone or EUV and soft X-rays so that a full field imaging (by contact masks or by projection optics when using EUV radiation) on the luminescent material is possible; as is well known, the full field imaging technique is much faster than the beam-writing one (associated to a computerized translation stage of the target) like that proposed in WO2008/095884. Typical figure of merit give a high resolution (< 1 µm) writing velocity of several hours/cm² for the electronic cannon and of 1 second/cm² for both laser-plasma and discharge plasma sources.

However, starting from the process described in WO2008/095884, it is not at all evident which irradiation beam energies are suitable with these sources, because such document does not even mention that such sources can be used for writing marks on a LiF, and in any case no indication is given as to how to determine the relevant parameters. For example, it is known in the art that the creation of colour centres is proportional to energy dose rather than fluence, but one cannot derive from the cited document the correct thickness of the LiF to be used with EUV or X-rays sources. This is true also for the dimension of the pixel and for the dose rate. Further complex research is needed to find the suitable parameters and ranges.

Last but not the least, the above-cited ionising radiation sources cannot be used to realise a projection lithography, because both mirrors and masks with high reflectivity at normal incidence for radiation with spectral energies larger than 0.4 keV are not available. On the contrary, mirrors and masks having normal-incidence reflectivities larger than 65% for radiation with spectral energies around 0.1 keV are commercially available, thanks to the technology developed in the frame of the EUV projection lithography.

It is object of the present invention to provide an invisible writing method based on lithography of luminescent materials, that solves the problems and avoids the drawbacks of the prior art.

It is further specific object of the present invention to provide an anti-counterfeiting method based on lithography of luminescent materials, that makes use and implements the invisible writing methods that are objects of the invention.

It is further specific object of the present invention a luminescent material to be used for anti-counterfeiting purposes , that implements the invisible writing method that is object of the invention.

It is subject-matter of the present invention an invisible writing method based on lithography of luminescent materials, comprising the steps of:
- one irradiates a luminescent material, i.e. a photostimulable luminescence material, by means of soft X-rays or EUV ionising radiation beam with spectral energy lower than 400 eV, in such a way to form on the material a trace of colour centres corresponding to a pre-determined image,
- the irradiation takes place with a density *D*_{I} of radiant energy, incident on said luminescent material, comprised between 0.01 J/cm² and 3 J/cm², delivering to the luminescent material a dose *D*_{A} comprised between 0.1 kJ/cm³ and 2000 kJ/cm³,
such an irradiation density value *D*_{I} and dose *D*_{A} being suitable to create a colour centres density such that said image is visible only when irradiated by light radiation of excitation of the same colour centres in the relevant absorption band, the method being characterised in that:
the luminescent material is structured as a series of two or more thin layers separated each other by non-luminescent materials, the thickness of said two or more layers increasing from the layer facing the ionising radiation under writing process to the opposite side of said luminescent structured material, so that, after said irradiation by electromagnetic ionizing radiation, the spectral energy of the used ionising radiation affects the luminescence ratio of the different layers, and therefore a mark imprinted with an ionising radiation having a spectral energy different from a pre-determined original one can be easily identified.

The range relevant to the energy density is wide as a consequence of the fact that the actual used density depends on the luminescent material whereon one writes the image according to the method of the invention. Between a luminescent material and the other, there can be and there are differences of orders of magnitude for the energy density needed to create the colour centres image and to be able to read it correctly, always keeping the invisibility when one does not use the reading conditions of the invention. Even the peak power density (i.e. the dose rate) of the EUV or soft X-ray radiation on the sensitive target can influence the optimum energy density.

The ranges are also influenced by the state of the luminescent material. If it is perfectly transparent, then a smaller energy dose is needed write the invisible image, whilst if it has a coloured background and/or it is dirty and/or scraped, then the energy dose can be larger, because the surface state also determines its invisibility.

Preferably according to the invention, the irradiation takes place with a density *D*_{I} of radiant energy, incident on said luminescent material, comprised between 0.01 J/cm² and 0.3 J/cm², and with a dose *D*_{A} comprised between 5 kJ/cm³ and 130 kJ/cm³.

Preferably according to the invention, the luminescent material (11) is an alkaline halide, in form of a crystal or amorphous polycristal, or thin crystalline or polycrystalline film deposited on a suitable support.

Preferably according to the invention, said alkaline halide is the lithium fluoride.

Preferably according to the invention, *D*_{I} is comprised between 0.07 J/cm² and 0.12 J/cm², *D*_{A} is comprised between 0.5 kJ/cm³ and 130 kJ/cm³, and a spectral energy larger than 14 eV

Preferably according to the invention, the luminescent material is selected in the group consisting of: LiF, CdF, or BaFBr:Eu2+ and, more in general, any material so-called "with photostimulable luminescence" wherein Ce3+ or Eu2+ cations are included in silicated, borated, phosphated halided glasses or in a mixture of such glasses.

Preferably according to the invention, the spatial trace of the colour centres imprinted on the luminescent material, and corresponding to said pre-determined hidden image, is determined by a transmission mask placed in contact to or at a distance *d* > 0 from the same material.

This is considered a full field imaging technique. For example, a coin with few holes can be used in contact, in which case the image will corresponds to few spots, or at a distance, in which case the image will correspond to a diffraction figure, that needs a reverse calculation to extract the original drawing.

The above-mentioned method in document WO2008/095884 can use only contact masks because there are no reflecting materials which reflect the right wavelength (e.g. absorbing strips to imprint a bar code).

Preferably according to the invention, the spatial colour centres trace imprinted on the luminescent material and corresponding to said pre-determined image is determined by a reflection mask placed at a distance *d* > 0 from the same material.

Preferably according to the invention, the spectral energy is comprised within 82 eV and 95 eV.

Preferably according to the invention, the drawing relevant to the mask is modified and/or projected, through any optics or optics group, on the luminescent material.

The projection or modification optics is expensive because of the EUV-X rays spectrum, which makes both reflective coatings and transmissive materials difficult to be realised. In the case of projection optics, there is the additional difficulty of design and alignment that is not a trivial exercise.

This allows, by using non-contact reflecting masks, to improve very much the spatial resolution of the imprinted drawing. This would be impossible by contact masks because of blurring effects.

Preferably according to the invention, the spatial colour centres trace to be created on the luminescent material is realised by using an optical system apt to modulate a suitable beam of electromagnetic ionising radiation, point-by-point reproducing the intensity to be imprinted on the luminescent material and corresponding to said pre-determined image.

Preferably according to the invention, the point-by-point formation of the image is realised by moving a projection or transmission or contact mask and by keeping fixed the luminescent material or, vice versa, by moving the luminescent material and keeping fixed the mask, be it a projection or transmission or contact mask, or according to a combination of these two modes.

Preferably according to the invention, the image to be created on the luminescent material derives from a mathematical transform of an original image, or by any coding system that associates the original image to a coded image, be it continuous or discrete in the space.

Preferably according to the invention, once the desired image has been imprinted, the luminescent material is protected by possible exposure to abrasion, humidity, contact with water, or other deteriorating agents, by means of surface deposition of a thin film based on silicon, silicon nitride or other transparent and resistant material.

It is further specific subject-matter of the present invention an anti-counterfeiting method based on lithography of luminescent materials, characterised in that:
A. one irradiates a luminescent material, i.e. a photostimulable luminescence material, by means of soft X-rays or EUV ionising radiation beam with spectral energy lower than 400 eV, in such a way to form on the material a trace of colour centres corresponding to a pre-determined image, the irradiation taking place with a density *D*_{I} of radiant energy, incident on said luminescent material, comprised between 0.01 J/cm² and 3 J/cm², delivering to the luminescent material a dose *D*_{A} comprised between 0.1 kJ/cm³ and 2000 kJ/cm³,
   such an irradiation density value *D*_{I} and dose *D*_{A} being suitable to create a colour centres density such that said image is visible only when irradiated by light radiation of excitation of the same colour centres in the relevant absorption band, and in that it comprises the subsequent further steps of reading of the invisible images imprinted by luminescent materials lithography of step A:
B. sending on the colour centres an excitation light radiation comprised in their absorption band, as a consequence of which the colour centres emit a luminescent image;
C. detecting such luminescent image through a light filter suitable to exclude said excitation light radiation as well as possible other noise frequencies;
D. storing, by means of an apparatus provided with a camera (23), such as for example a microscope or a mobile telephone, said luminescent image;
E. reconstructing said luminescent image on the basis of the values of the writing physical parametres utilised in step A.

It is further specific subject-matter of the present invention a luminescent material to be used for anti-counterfeiting purposes with the methods that are subject-matter of the present invention, characterised in that it is structured as a series of two or more thin layers separated each other by non-luminescent materials, the thickness of said two or more layers increasing from the layer facing the ionising radiation under writing process to the opposite side of said luminescent structured material, so that, after irradiation by electromagnetic ionizing radiation with the methods that are subject-matter of the present invention, the spectral energy of the used ionizing radiation affects the luminescence ratio of the different layers, and therefore a mark imprinted with a ionising radiation having a spectral energy different from a pre-determined original one can be easily identified.

The invention will be now described by way of illustration but not by way of limitation, making specific reference to the figures of the enclosed drawings, wherein:
- figure 1 shows in a) a schematic set-up for the writing of a luminescent image on LiF by means of ionising radiation having a spectral energy of less than 0.4 keV and dose *D*_{A} comprised between 0.1 kJ/cm³ and 2000 kJ/cm³, filtered by a mask, and in b) a system for the reading of the image, according to the invention;
- figure 2 shows in a) a detail of the fluorescent image impressed on LiF through a contact mask, as observed by optical microscope provided with CCD detector, using the set-up of figure 1 b; in b) a detail of the image impressed on a LiF through the same mask but placed at a distance of 26 mm from the LiF, and therefore a blurred image, in both photos having been used a 20X objective, the spatial scale bar being equal to 0,25 mm;

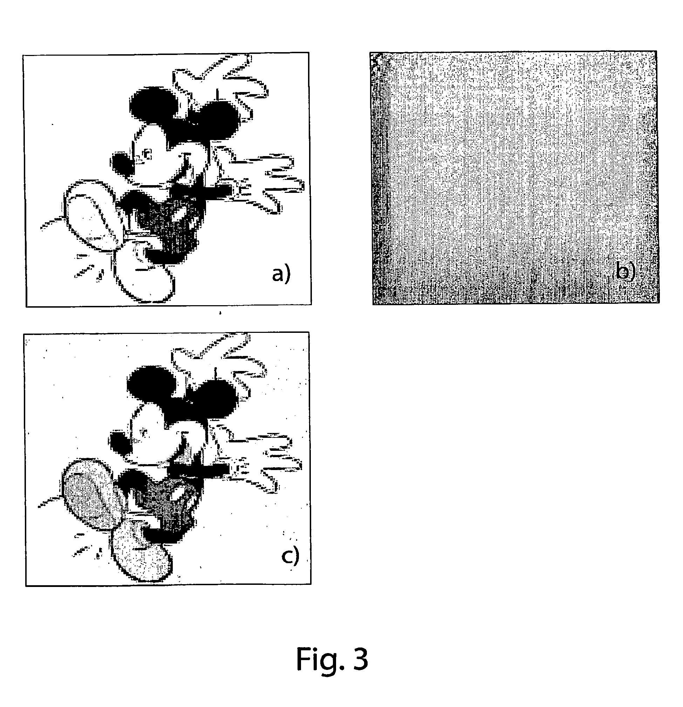

- figure 3 shows in a) an original drawing, in b) an array of points to be written on the luminescent film and corresponding to the transform of a) with the addition of a background noise, in c) the reconstruction by means of anti-transform of the array of point b);

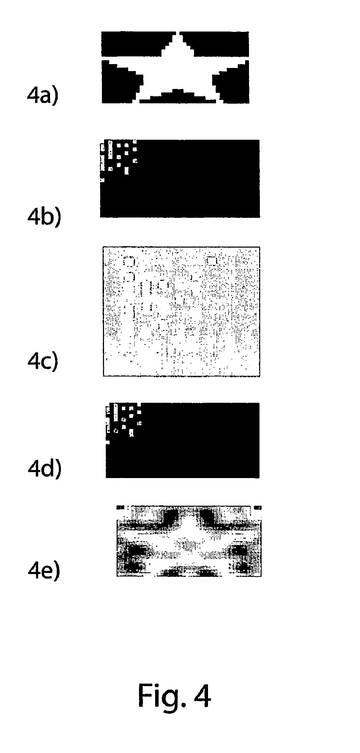

- figure 4 shows in a) an original image (40 x 20 pixels), in b) the array of the image coded by using 3% of the parametres and a dynamics of 4 grey levels, in c) the image shot by a webcam and digitalised (456 x 392 pixel): the two white pixels on the first row have been added to allow the recognition of the pattern by the decodification software, in d) the recognition of the pattern and the construction of a pixel array, in e) the image as decoded by means of anti-transform;

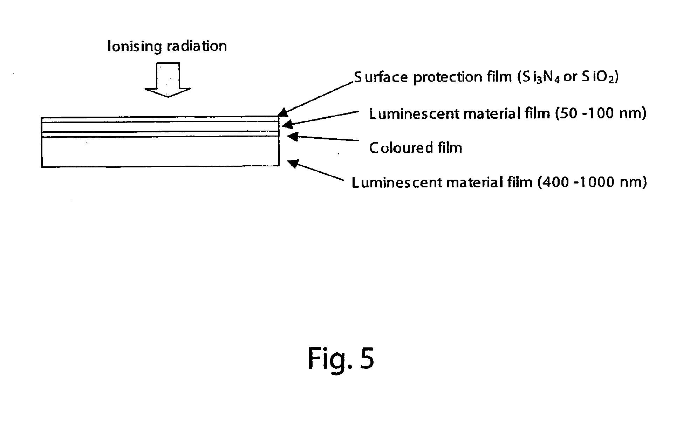

- figure 5 shows a structured luminescent material according to the invention that can be imprinted by the invention invisible writing method.

To remedy the problem of the prior art, a new traceless/watermarking technique is described in the following, which utilises physical (nondigital) writing process by means of lithography using radiation (for example electromagnetic radiation with emission spectrum typically comprised between extreme ultraviolet and soft x-rays) incident on a photo-luminescent support. To the physical writing, software techniques of coding-decoding can be associated.

It deals with an absolutely new anticounterfeiting technique, the forgery of which presents difficulties practically insuperable and which has security coefficient that is scalable according to the needs.

The controlled coloration induction of luminescent materials is known, as for example that of lithium fluoride (LiF) by means of irradiation with ionising radiation pulses (soft x-rays and EUV) emitted by a laser plasma source.

In the following, the examples will be illustrated only by reference to the LiF, but it is clear that the same technical concept applies to other materials.

In any case, the spectral energy used with the invention is below 0.4 keV.

The LiF is a transparent salt with very low luminescent capability. If it is irradiated with ionising radiation, the so-called "colour centres" are generated in the LiF, that are anionic vacancies localised in the crystal lattices wherein an electron is caught. Some of the colour centres (for example the F₂ and F₃⁺ centres, that is two or three neighboring anionic vacancies filled by two electrons), when illuminated by blue light, emit light in the visible spectral region comprised between the green and the red. In particular, the irradiation with EUV or soft x-rays through a suitable mask can generate, in the LiF, a luminescent drawing with a high spatial resolution, thanks to the small wavelength of the utilised radiation and the atomic dimension of the colour centres. Moreover, since the penetration length of the EUV radiation is very small in the LiF (less than 40 nm for wavelengths between 12 and 90 nm), it is possible to obtain these luminescent drawings on thinnest and most flexible films of LiF.

The writing and reading set-up of the invisible drawings on LiF is illustrated in figure 1.

The basic technical concept is that of writing, by means of ionising radiation, a drawing-replica of the mask 12 on the thin film 11 of LiF (figure 1 a) that can be applied to the document/object for anticounterfeiting/tracking aims. For suitable quantities of radiating energy 13 absorbed in the LiF, the drawing is invisible both with the nacked eye and after any treatment of elaboration and imagine-decoding utilised by counterfeiters (digital filters, dedicated software). The system according to the invention, indeed, provides for a "physical" (nondigital) reading of the drawing, that is impossible to perform without knowing the technique and the suitable tools. The test of the authenticity is obtained by means of the system for reading the fluorescent image with the blue light (figure 1 b), comprising a filter 22 that transmits green+yellow+red light and is interposed between the LiF film 11 and the CCD camera 23, and by means of different coding/decoding systems, as detailed in the following.

The anticounterfeiting system according to the invention is based on a writing device and a reading device.

The writing device creates a drawing on luminescent support (for example LiF, CdF, or BaFBr:Eu2+ and more in general any material so-called "with photostimulable luminescence" wherein Ce3+ or Eu2+ cations are included in silicated, borated, phosphated, halides glasses or in a mixture of such glasses) by means of contact EUV lithography or projection EUV lithography using ionising radiation and possibly one or more masks placed respectively in contact or at a distance from the same luminescent material.

The total energy density released to the luminescent material will have to be smaller than that needed for creating a drawing visible with ambient (natural or artificial) light and larger than that needed for creating a suitable density of colour centres, which afterwards can emit light per se perceptible with the nacked eye when irradiated by light radiation in their absorption band. The expression "per se perceptible" takes into account the fact that the emitted light could be covered by the ambient noise or others, that however is easily removable by means of filters (see farther in the following).

The optimum irradiation zone (i.e. the values of the above-mentioned radiant energy 13) is the one that guarantees an absolute invisibility of the drawing when one observes the luminescent drawing with ambient light and vice versa the visibility of the same drawing when it is observed according to the set-up of figure 1 b. In this figure, the irradiated material is illuminated by light whose wavelength is comprised in the absorption spectrum of the colour centres, and the drawing is observed by interposing a filter, that is suitable to transmit the emission spectrum of the colour centres, between the photoluminescent material and the reading system. Such radiant energy density is comprised between 0,01 J/cm² and 3 J/cm².

For example for the LiF one will use incident blue light, observed by interposing a yellow filter between the LiF and the reading system (for example microscope, CCD, camera, mobile phone provided with camera).

The advantage of using a luminescent material like the LiF consists, among others, in its high dynamic and linearity of response with respect to the radiation quantity used to generate the colour centres. This allows to be able to represent an image not only by means of digital sequences of "0" and "1 ", as it occurs in other anticounterfeiting systems that use a traceless technique, but even by associating to each irradiated sector (pixel) a brightness that can vary within a wide range of values.

In order to further hide the drawing, various methods of coding/decoding can be used: by way of illustration, three methods are briefly described in the following:
A) Always taking into account the fact that the written image is invisible with the nacked eye, there are more possible methods to make the read image devoid of meaning without a decoding. In such cases, the image read with the suitable tools is still a recognizable image (for example a mark or a bar code or an alphanumeric code or a grey tones image) but it must be compared with one or more reference images to determine its originality. In the case of grey tones, for example, a simple software can compare the predetermined values with the read values and decide on the correspondence or non-correspondence of the arrays. Possible counterfeiting attempts of forgers that use a commercially available electron beam writing system can be simply avoided just by using a multilayer LiF structure (the penetration depth of EUV radiation is different from that of electrons) or by a spectral analysis of the luminescence spectrum.
B) A second system, even more secure, provides that, during the writing of the drawing, the mask is placed at a certain distance from the LiF film. Because of the diffraction, a blurred drawing of the mask is written on the LiF, and it will appear as such to the reading system. In order to obtain the replica of the mask, the blurred image must be elaborated by means of suitable software that, being known the distances between source, mask and LiF, takes into account the effect of the diffraction. In this reconstruction process, the high dynamics of the contrastresponse of the LiF (10-12 bits) plays a fundamental role. Once the in-focus image of the mask is reconstructed, one proceeds as in the preceding case for the decoding. In this second writing system, the drawing comes out to be not legible even to the counterfeiter that by contradiction knows the technology and has the reading tools. Indeed, if one does not know a priori the relative distances source-mask-LiF and the source's power, it is not possible to reconstruct the image of the same mask.
C) A third system provides that the contact mask used in the writing repeats an array of points derived from a mathematical transform of the original drawing-mark. Once acquired from the reading system, the array of points is elaborated by an ad-hoc software that allows the reconstruction of the true drawing by means of suitable anti-transform. In this third writing system, similarly to the system mentioned in point B), the original drawing does not appear even to whom, who knows the reading system. Only a specific mathematical elaboration allows to obtain back the original drawing/logo/mark/code.

Obviously, the counterfeiter can try to ignore the "true" drawing, and reproduce directly the array that, by contradiction, has succeeded to read. In such a case, the security of a technology intervenes, that is expensive and, as a matter of fact, too much complex to be attempted with success. Indeed, besides the difficulty of finding the value of the optimal electromagnetic energy density for writing the invisible drawing, the complexity of the writing system using ionising radiation can be augmented at will till one makes it virtually inimitable; it is possible for example to project the drawing of the mask through a special optics instead of the simple "contact" reproduction illustrated in figure 1, allowing the creation, from the same mask, of a practically unlimited number of different drawings.

After all, the luminescent material film having imprinted on itself the watermarking invisible drawing becomes a label that can be fixed to the object and/or wrapping to be protected and/or identified, by using a suitable adhesive. In case of possible exposure of the anticounterfeiting label to abrasion, humidity, contact with the water or other aggressive chemical and/or mechanical agents, the same can be protected by the deposition of a thin film based on silicon or other transparent and resistant material, improving the durability and the resistance to the external agents.

Moreover, it is possible to modulate the technology of the present invention to very different scenarios and needs.

For example, the writing of the drawing can be limited to very small surfaces, equal to fractions of square millimetre, making indispensable the use of a microscope for the reading (complex and in loco reading apparatus) or extend the drawing to wide surfaces of the order of few square centimetres, making it possible the acquisition of the image (always using the set-up of figure 1 b) by means of mobile phone provided with camera, so as to be able to send the image, for the decoding and test, to a mobile phone-PC system or remote handheld (simple and remote reading apparatus).

After all, the present finding represents an insoluble problem for the counterfeiter: indeed, the writing-reading technology by means of ionising radiation on luminescent film is known only in the restricted circle of experts; the pixel array that hides the drawing-mark is extremely difficult (and expensive) to be written, difficult to be read, complex to be decoded. As a matter of fact, in the today's state of the art, no anticounterfeiting techniques exist at industrial level that have a similar and intrinsic security both in the writing and reading steps.

### Examples of application on prototypes

The feasibility of the writing on luminescent support of an invisible image by means of ionising radiation, following the set-up of figure 1, has been successfully experimented. EUV-pulsed radiation, generated by a laser plasma-source, has been sent onto two thin films of LiF, by interposing a mask between source and film, respectively in contact and at 26 mm of distance from the same film. By using the set-up of figure 1b, the relevant images of the mask have been extracted, as shown in figure 2. As a matter of fact, the figures 2a and 2b are examples respectively of the system A) and B) mentioned in the previous paragraph.

It is important to stress that both the images in figure 2 are invisible with the naked eye and with a microscope, and becomes visible only after suitable lighting and filtering as schematised in figure 1 b. One can observe that the blurred image is not recognizable with respect to the original image.

The original image is obtained, knowing the relevant writing parametres, by means of a suitable software based on optical reconstruction techniques.

Concerning the above-mentioned system C), the technique of decoding of the contact mask image depends on the electromagnetic radiation power or the writing speed needed by the industrial application.

Let us discuss separately two limit cases.

If the radiation source is powerful and/or the production of a high number of anticounterfeiting labels is not required, one can think to an extended pixel array.

Figure 3a shows a complex drawing, constituted by different grey tones. In figure 3b, the array of a particular mathematical transform (discrete cosine) is reproduced, wherein all the information relevant to the drawing of figure 3a are stored. This is the pixel array that is written on the luminescent film. Moreover, in figure 3b background noise has been added which is able to simulate a disturbance of the signal in case the drawing-array is sent for a remote-control by means of mobile telephone having MMS (Multimedia Messaging Service) technology. In figure 3c, the reconstruction of the original drawing by means of anti-transform of drawing b) imprinted on the luminescent film is shown. One can appraise that the background noise does not prevent the unambiguous recognition of the original image.

Vice versa, in case the source emits radiation with low average power and/or the production of a high number of anticounterfeiting labels is required, then it is necessary to reduce the number of points of the array to be written on the luminescent film. This reduction of points corresponds to a reduction of information, that will damage the quality of the drawing reproduced by means of anti-transform of the points array. It is possible to realise an optimisation study in order to find the optimum compromise between the number of points and the unambiguous recognition of the reconstructed image.

Figure 4 shows an example of such an optimisation study. Figure 4a shows the drawing of a small (40 x 20 pixels) logo: a star. The drawing has been coded by mathematical transform with a drastic cut of the number of parametres (only three percent of the original parametres has been used) and reduction of the dynamics, thus obtaining an array, shown in figure 4b, wherein each pixel represents a parameter in terms of brightness. The array has been photographed by means of a commercial WebCam and subsequently digitalised in bitmap format with 256 grey tones (see figure 4c). Afterwards, a dedicated software has provided for the recognition of the drawings of the array and the normalisation of the brightness (insertion of grey tones in a pixels array) as shown in figure 4d. Finally, the decoding of the pixels array has allowed the reconstruction of the image as shown in figure 4e.

One can observe that the drastic cut of the number of pixels has led to a sensible loss of information and as a consequence to a not much sharp reconstructed image, although still unambiguously recognisable. One must also take into account that the cut of the number of transform's parametres implies a reduction of the reconstructed image quality on one hand, and on the other hand entails a drastic reduction of the writing/reading times of the array and a reduction of the sensibility of the system to errors during both the process of formation of the image and the process of its reconstruction.

Moreover, instead of the electromagnetic radiation, another ionising radiation can be used, such as for example an electron beam. The electrons can be sent as an electron beam that writes directly the image without the need of interposing a mask.

In particular, an electron beam has been used in order to demonstrate that not all the ionising radiation densities are apt to create the image according to the invention. Indeed, by using a radiant energy density of 25 J/cm² on LiF, it is possible to create a visible drawing even without using the arrangements of the invention (in the specific case it came out to be visible with the microscope without particular irradiation). This has the consequence that the radiant energy density must necessarily be in the specific case less than 25 J/cm² in order that one can have the latent image according to the invention, i.e. visible when irradiated according to the described method.

Further, according to a preferred embodiment of the present invention, the formation of the image point-by-point is realised by moving the mask in projection or transmission or contact mode, while keeping fixed the luminescent material or, vice versa, by moving the luminescent material while keeping fixed the mask, be it in projection or transmission or contact mode, or according of a combination of the two methods.

The last embodiment takes into account that the ionising radiation source is pulsed. The density of the colour centres is therefore modulated point-by-point by making the radiation pass through the mask only for a determined number of impulses and then by shifting the same mask, thus obtaining a density that is variable according to the considered point. Of course, being the movement relative, one obtains the same effect with the movement of the substrate or with the movement of both ones.

It has been experimented a further application of the process and system according to the invention, as well. A LiF sample treated according to the invention has been placed in contact with radioactive materials (cobalt57, cobalt60, barium133) for more than 1000 hours with a total radiation dose equal to 1600 Gray (Gy).

More in detail, the LiF film has been placed between two lead half-shells, so as to be subjected also to the backscattered radiation.

The result has been surprising: the image written according to the invention on the LiF film has not been modified at all by the high energy radiations. This is because of the large difference of the penetration depth in LiF between EUV radiation and high energy ionizing radiation emitted by radioactive elements.

This has a very important applicative consequence. Indeed, the material treated according to the invention can be used for the traceability of high radioactive material (by applying the film according to the invention to the material or container), for example in order to follow the material during its disposal, and therefore to know possible fraud or illegal commerce, that is a very important issue from the social point of view. The traceability of the waste could concern for example some hospital materials used in the nuclear medicine wards.

Last but not least, and referring to figure 5, it is proposed according to the invention a structured luminescent material that can be imprinted by the invention invisible writing method.

The luminescent material is structured as a series of two (or more) thin layers separated each other by a non-luminescent material, e.g. a coloured thin layer. The layer facing the ionising radiation under writing process is thinner (e.g. 50-100 nm) than the other layer (e.g. 400-1000 nm). When more than two layers are used, thickness increases from the layer facing the ionising radiation under writing process to the opposite side of the luminescent structured material.

By using such an inventive support, after said irradiation by electromagnetic ionizing radiation, the spectral energy of the used ionizing radiation affects the luminescence ratio of the different layers. As a consequence, a faked mark made by a counterfeiter that uses ionising radiation with a different spectral energy than that proposed in this invention can be easily identified.

Numerous industrial sectors suffer from the problem of counterfeiting: textile, magnetic cards, pharmaceutics, watches, cars spare parts. The counterfeiting is an old and serious worldwide problem. It is old because it has always existed, even though in the past it had smaller dimensions, and a relevant definite solution has never been found. It is serious for its dimensions: a typical merit figure indicates that the goods counterfeiting amounts to around 5 - 7% of the worldwide commerce. Obviously it is difficult to quantify the problem, but a recent report of the Organisation for Economic Co-operation and Development (OECD) provides a conservative estimation of the counterfeited goods value that is equal to 250 billions in the year 2007 (http://www.oecd.org.dataoecd/57/27/44088872.pdf).

The described invention presents features that are innovative and have a higher intrinsic security with respect to the state of the art in the field of anti-counterfeiting technology. Moreover, the associated technology can be applied to any object, document or magnetic card, thus making the invention system ubiquitous and versatile with respect to the different scenarios in which the traceability, identification, lawfulness of the distribution and authenticity of the object/document are required.

Taking into account the wide audience of the categories interested to an actually effective anticounterfeiting system (Public Administration, Marks Proprietors, Partners in the supply chain, Distributors, Subcontractors, Customs, Police, Law Offices, Judiciary, etc.), the industrial perspectives of the present invention are highly relevant.

To conclude, the finding that is subject-matter of the present invention comes out to be innovative and more effective than the anticounterfeiting systems of the prior art that have similar object.

The preferred embodiments have been above described and some modifications of this invention have been suggested, but it should be understood that those skilled in the art can make variations and changes, without so departing from the related scope of protection, as defined by the following claims.

## Claims

1. Invisible writing method based on lithography of luminescent materials, comprising the steps of:
- one irradiates a luminescent material (11), i.e. a photostimulable luminescence material, by means of soft X-rays or EUV ionising radiation (13) beam with spectral energy lower than 400 eV, in such a way to form on the material a trace of colour centres corresponding to a pre-determined image,
- the irradiation takes place with a density *D*_{I} of radiant energy, incident on said luminescent material, comprised between 0.01 J/cm² and 3 J/cm², delivering to the luminescent material a dose *D*_{A} comprised between 0.1 kJ/cm³ and 2000 kJ/cm³,
such an irradiation density value *D*_{I} and dose *D*_{A} being suitable to create a colour centres density such that said image is visible only when irradiated by light radiation of excitation of the same colour centres in the relevant absorption band, the method being **characterised in that**:
the luminescent material (11) is structured as a series of two or more thin layers separated each other by non-luminescent materials, the thickness of said two or more layers increasing from the layer facing the ionising radiation under writing process to the opposite side of said luminescent structured material, so that, after said irradiation by electromagnetic ionizing radiation, the spectral energy of the used ionising radiation affects the luminescence ratio of the different layers, and therefore a mark imprinted with a ionising radiation having a spectral energy different from a pre-determined original one can be easily identified.

2. Method according to claim 1, **characterised in that** the irradiation takes place with a density *D*_{I} of radiant energy, incident on said luminescent material, comprised between 0.01 J/cm² and 0.3 J/cm², and with a dose *D*_{A} comprised between 5 kJ/cm³ and 130 kJ/cm³.

3. Method according to claim 1 or 2, **characterised in that** the luminescent material (11) is an alkaline halide, in form of a crystal or amorphous polycristal, or thin crystalline or polycrystalline film deposited on a suitable support.

4. Method according to claim 3, **characterised in that** said alkaline halide is the lithium fluoride.

5. Method according to claim 4, **characterised in that** *D*_{I} is comprised between 0.07 J/cm² and 0.12 J/cm², *D*_{A} is comprised between 0.5 kJ/cm³ and 130 kJ/cm³, and a spectral energy larger than 14 eV.

6. Method according to claim 1 or 2, **characterised in that** the luminescent material (11) is selected in the group consisting in: LiF, CdF, or BaFBr:Eu2+ and, more in general, any material so-called "with photostimulable luminescence" wherein Ce3+ or Eu2+ cations are included in silicated, borated, phosphated halided glasses or in a mixture of such glasses.

7. Method according to any claim 1 to 6, **characterised in that** the spatial trace of the colour centres imprinted on the luminescent material (11), and corresponding to said pre-determined hidden image, is determined by a transmission mask (12) placed in contact to or at a distance *d* > 0 from the same material.

8. Method according to any claim 1 to 6, **characterised in that** the spatial colour centres trace imprinted on the luminescent material (11) and corresponding to said pre-determined image is determined by a reflection mask (12) placed at a distance *d* > 0 from the same material.

9. Method according to claim 8, **characterised in that** the spectral energy is comprised within 82 eV and 95 eV.

10. Method according to claim 7 or 9, **characterised in that** the drawing relevant to the mask (12) is modified and/or projected, through any optics or optics group, on the luminescent material (11).

11. Method according to any claim 1 to 10, **characterised in that** the spatial colour centres trace to be created on the luminescent material (11) is realised by using an optical system apt to modulate a suitable beam of electromagnetic ionising radiation, point-by-point reproducing the intensity to be imprinted on the luminescent material (11) and corresponding to said pre-determined image.

12. Method according to any claim 1 to 11, **characterised in that** the point-by-point formation of the image is realised by moving a projection or transmission or contact mask (12) and by keeping fixed the luminescent material (11) or, vice versa, by moving the luminescent material (11) and keeping fixed the mask (12), be it a projection or transmission or contact mask, or according to a combination of these two modes.

13. Method according to any claim 1 to 12, **characterised in that** the image to be created on the luminescent material derives from a mathematical transform of an original image, or by any coding system that associates the original image to a coded image, be it continuous or discrete in the space.

14. Method according to any claim 1 to 13, **characterised in that**, once the desired image has been imprinted, the luminescent material (11) is protected by possible exposure to abrasion, humidity, contact with water, or other deteriorating agents, by means of surface deposition of a thin film based on silicon, silicon nitride or other transparent and resistant material.

15. Anti-counterfeiting method based on lithography of luminescent materials, **characterised in that** the following steps are performed:
A. irradiating a luminescent material (11) as defined in and according to the method of any claim 1 to 14,
and **in that** it comprises the subsequent further steps of reading of the invisible images imprinted by luminescent materials lithography of step A:
B. sending on the colour centres an excitation light radiation comprised in their absorption band, as a consequence of which the colour centres emit a luminescent image;
C. detecting such luminescent image through a light filter suitable to exclude said excitation light radiation as well as possible other noise frequencies;
D. storing, by means of an apparatus provided with a camera (23), such as for example a microscope or a mobile telephone, said luminescent image;
E. reconstructing said luminescent image on the basis of the values of the writing physical parametres utilised in step A;
F. decoding of the said luminescent image if it is the result of the coding of a primary image.

16. Luminescent material (11) to be used for anti-counterfeiting purposes with the methods according to any claim 1 to 15, **characterised in that** it is structured as a series of two or more thin layers separated each other by non-luminescent materials, the thickness of said two or more layers increasing from the layer facing the ionising radiation under writing process to the opposite side of said luminescent structured material, so that, after irradiation by electromagnetic ionizing radiation with the methods of any claim 1 to 15, the spectral energy of the used ionizing radiation affects the luminescence ratio of the different layers, and therefore a mark imprinted with a ionising radiation having a spectral energy different from a pre-determined original one can be easily identified.

## Patentansprüche

1. Verfahren zum unsichtbaren Schreiben auf Basis einer Lithographie mit lumineszenten Materialien, umfassend die Schritte:
- Bestrahlung eines lumineszenten Materials (11), d. h. eines photostimulierbaren lumineszenten Materials, mittels weicher Röntgenstrahlen oder eines Strahls ionisierender EUV-Strahlung (13) mit einer Spektralenergie von weniger als 400 eV, in solcher Weise, dass auf dem Material eine Spur von Farbzentren, die einem vorgegebenen Bild entspricht, gebildet wird,
- wobei die Bestrahlung mit einer Dichte D_{I} der auf das lumineszente Material einfallenden Strahlungsenergie, welche in einem Bereich zwischen 0,01 J/cm² und 3 J/cm² liegt, stattfindet und an das lumineszente Material eine Dosis D_{A} im Bereich zwischen 0,1 kJ/cm³ und 2000 kJ/cm³ abgegeben wird,
wobei der Bestrahlungsdichtewert D_{I} und die Dosis D_{A} geeignet sind, eine solche Farbzentrendichte zu erzeugen, dass das Bild nur sichtbar ist, wenn es mit Lichtstrahlung zur Anregung derselben Farbzentren in der relevanten Absorptionsbande bestrahlt wird, wobei das Verfahren **dadurch gekennzeichnet ist,**
**dass** das lumineszente Material (11) als Folge von zwei oder mehr Dünnschichten, die von einander durch nicht-lumineszente Materialien getrennt sind, strukturiert ist, wobei die Dicke der zwei oder mehr Schichten von der Schicht, die der ionisierenden Bestrahlung bei dem Schreibprozess zugewandt ist, zur gegenüberliegenden Seite des lumineszenten strukturierten Materials hin zunimmt, sodass nach der Bestrahlung mit ionisierender elektromagnetischer Strahlung die Spektralenergie der verwendeten ionisierenden Strahlung das Lumineszenzverhältnis der verschiedenen Schichten beeinflusst und deshalb eine Markierung, die mit einer ionisierenden Strahlung eingeprägt wurde, welche eine Spektralenergie aufweist, die sich von einer vorgegebenen originalen Spektralenergie unterscheidet, leicht identifiziert werden kann.

2. Verfahren nach Anspruch 1, **dadurch gekennzeichnet, dass** die Bestrahlung mit einer Dichte D_{I} der auf das lumineszente Material einfallenden Strahlungsenergie, welche im Bereich zwischen 0,01 J/cm² und 0,3 J/cm² liegt, und mit einer Dosis D_{A}, die im Bereich zwischen 5 kJ/cm³ und 130 kJ/cm³ liegt, stattfindet.

3. Verfahren nach Anspruch 1 oder 2, **dadurch gekennzeichnet, dass** es sich bei dem lumineszenten Material (11) um ein Alkalihalogenid, in Form eines Kristalls oder amorphen Polykristalls oder eines dünnen kristallinen oder polykristallinen Films, der auf einem geeigneten Träger abgeschieden ist, handelt.

4. Verfahren nach Anspruch 3, **dadurch gekennzeichnet, dass** das Alkalihalogenid Lithiumfluorid ist.

5. Verfahren nach Anspruch 4, welches dadurch, dass D_{I} im Bereich zwischen 0,07 J/cm² und 0,12 J/cm² liegt, dadurch dass D_{A} im Bereich zwischen 0,5 kJ/cm³ und 130 kJ/cm³ liegt, und durch eine Spektralenergie von mehr als 14 eV gekennzeichnet ist.

6. Verfahren nach Anspruch 1 oder 2, **dadurch gekennzeichnet, dass** das lumineszente Material (11) aus der Gruppe ausgewählt ist, welche aus LiF, CdF oder BaFBr:Eu²⁺ und allgemeiner jedem Material mit sogenannter "photostimulierbarer Lumineszenz", worin Ce³⁺- oder Eu²⁺-Kationen in Silikat-, Borat-, Phosphat-, Halogenidgläsern oder in einer Mischung solcher Gläser eingeschlossen sind, besteht.

7. Verfahren nach irgendeinem Anspruch 1 bis 6, **dadurch gekennzeichnet**, das die räumliche Spur der Farbzentren, die dem lumineszenten Material (11) eingeprägt wird und dem vorgegebenen verborgenen Bild entspricht, durch eine Transmissionsmaske (12), die in Kontakt mit oder in einer Distanz d > 0 von demselben Material platziert ist, bestimmt wird.

8. Verfahren nach irgendeinem Anspruch 1 bis 6, **dadurch gekennzeichnet, dass** die räumliche Spur der Farbzentren, die dem lumineszierenden Material (11) eingeprägt wird und dem vorgegebenen Bild entspricht, durch eine Reflexionsmaske (12) die in einer Distanz d > 0 von demselben Material platziert ist, bestimmt wird.

9. Verfahren nach Anspruch 8, **dadurch gekennzeichnet, dass** die Spektralenergie im Bereich zwischen 82 eV und 95 eV liegt.

10. Verfahren nach Anspruch 7 oder 9, **dadurch gekennzeichnet, dass** die der Maske (12) entsprechende Zeichnung durch irgendeine optische Vorrichtung oder Gruppe optischer Vorrichtungen modifiziert und/oder auf das lumineszente Material (11) projiziert wird.

11. Verfahren nach irgendeinem Anspruch 1 bis 10, **dadurch gekennzeichnet, dass** die räumliche Farbzentrenspur, die auf dem lumineszenten Material (11) erzeugt werden soll, unter Verwendung eines optischen Systems realisiert wird, welches dazu ausgelegt ist, einen geeigneten Strahl ionisierender elektromagnetischer Strahlung zu modulieren, wobei die Intensität, die dem lumineszenten Material (11) eingeprägt werden soll und dem vorgegebenen Bild entspricht, Punkt für Punkt reproduziert wird.

12. Verfahren nach irgendeinem Anspruch 1 bis 11, **dadurch gekennzeichnet, dass** die Punkt-für-Punkt-Erzeugung des Bildes durch Bewegung einer Projektions- oder Transmissions- oder Kontaktmaske (12) und durch fixiert Halten des lumineszenten Materials (11) oder umgekehrt durch Bewegung des lumineszenten Materials (11) und fixiert Halten der Maske (12), wobei die Maske eine Projektions- oder Transmissions- oder Kontaktmaske sein kann, oder mittels einer Kombination dieser beiden Modi realisiert wird.

13. Verfahren nach irgendeinem Anspruch 1 bis 12, **dadurch gekennzeichnet, dass** das Bild, welches auf dem lumineszenten Material erzeugt werden soll, von einer mathematischen Transformation eines ursprünglichen Bildes oder irgendeinem Codierungssystem, welches das ursprüngliche Bild einem codierten Bild, sei es kontinuierlich oder diskret im Raum, zuordnet, abgeleitet ist.

14. Verfahren nach irgendeinem Anspruch 1 bis 13, **dadurch gekennzeichnet, dass** nachdem das gewünschte Bild eingeprägt wurde, das lumineszente Material (11) mittels der Oberflächenabscheidung eines Dünnfilms, der auf Silicium, Siliciumnitrid oder einem anderen transparenten und wiederstandsfähigen Material basiert, vor einer möglichen Exposition gegenüber Abrieb, Feuchtigkeit, Kontakt mit Wasser oder anderen beeinträchtigenden Agenzien geschützt wird.

15. Fälschungssicheres Verfahren auf der Basis einer Lithographie mit lumineszenten Materialien, **dadurch gekennzeichnet, dass** die folgenden Schritte durchgeführt werden:
A. Bestrahlung eines lumineszenten Materials (11) wie in dem Verfahren nach irgendeinem Anspruch 1 bis 14 definiert gemäß diesem Verfahren;
und dadurch, dass es die folgenden weiteren Schritte des Lesens der unsichtbaren Bilder, welche durch die Lithographie mit lumineszenten Materialien nach Schritt A eingeprägt wurden, umfasst:
B. Bestrahlen der Farbzentren mit einer Anregungslichtstrahlung, die von ihrer Absorptionsbande umfasst ist, in Folge dessen die Farbzentren ein lumineszentes Bild emittieren;
C. Nachweisen eines solchen lumineszenten Bildes durch einen Lichtfilter, welcher geeignet ist, die Anregungslichtstrahlung sowie mögliche andere Störfrequenzen auszuschließen;
D. Speichern des lumineszenten Bildes mittels einer mit einer Kamera versehenen Vorrichtung (23), wie zum Beispiel einem Mikroskop oder einem Mobiltelefon;
E. Rekonstruieren des lumineszenten Bildes auf der Basis der Werte der physikalischen Schreibparameter, die im Schritt A verwendet wurden;
F. Decodieren des lumineszenten Bildes, falls es das Ergebnis der Codierung eines primären Bildes ist.

16. Lumineszentes Material (11) zur Verwendung für Zwecke der Fälschungssicherung mit den Verfahren nach irgendeinem Anspruch 1 bis 15, **dadurch gekennzeichnet, dass** es als Folge von zwei oder mehr Dünnschichten, die von einander durch nicht-lumineszente Materialien getrennt sind, strukturiert ist, wobei die Dicke der zwei oder mehr Schichten von der Schicht, die der ionisierenden Strahlung beim Schreibprozess zugewandt ist, zur gegenüberliegenden Seite des lumineszenten strukturierten Materials hin zunimmt, sodass nach Bestrahlung durch ionisierende elektromagnetische Strahlung mit den Verfahren nach irgendeinem Anspruch 1 bis 15 die Spektralenergie der verwendeten ionisierenden Strahlung das Lumineszenzverhältnis der verschiedenen Schichten beeinflusst und deshalb eine Markierung, die mit einer ionisierenden Strahlung eingeprägt wurde, welche eine Spektralenergie aufweist, die sich von einer vorgegebenen originalen Strahlungsenergie unterscheidet, leicht identifiziert werden kann.

## Revendications

1. Procédé d'écriture invisible basé sur la lithographie de matériaux luminescents, comprenant les étapes consistant à :
- irradier un matériau luminescent (11), c'est-à-dire un matériau à luminescence photostimulable, par exposition à un faisceau de rayonnement ionisant de rayons X mous ou d'ultraviolets extrêmes (13) avec une énergie spectrale inférieure à 400 eV, de façon à former sur le matériau une trace de centres colorés correspondant à une image prédéterminée,
- l'irradiation étant réalisée avec une densité *D*_{I} d'énergie rayonnante incidente sur ledit matériau luminescent, comprise entre 0,01 J/cm² et 3 J/cm², délivrant au matériau luminescent une dose *D*_{A} comprise entre 0,1 kJ/cm³ et 2 000 kJ/cm³,
une telle valeur de densité d'irradiation *D*_{I} et de dose *D*_{A} étant adaptée pour créer une densité de centres colorés telle que ladite image n'est visible que lorsqu'elle est irradiée par un rayonnement lumineux d'excitation des mêmes centres colorés dans la bande d'absorption correspondante, le procédé étant **caractérisé en ce que** :
le matériau luminescent (11) est structuré sous forme d'une série de deux couches minces, ou plus, séparées l'une de l'autre par des matériaux non luminescents, l'épaisseur desdites deux couches ou plus augmentant à partir de la couche faisant face au rayonnement ionisant au cours du processus d'écriture jusqu'à la face opposée dudit matériau structuré luminescent, de sorte que, après ladite irradiation par le rayonnement électromagnétique ionisant, l'énergie spectrale du rayonnement ionisant utilisé affecte le rapport de luminescence des différentes couches, d'où il découle qu'une marque imprimée avec un rayonnement ionisant ayant une énergie spectrale différente de celle d'une marque d'origine prédéterminée peut être facilement identifiée.

2. Procédé selon la revendication 1, **caractérisé en ce que** l'irradiation est réalisée avec une densité *D*_{I} d'énergie rayonnante incidente sur ledit matériau luminescent, comprise entre 0,01 J/cm² et 0,3 J/cm², et avec une dose *D*_{A} comprise entre 5 kJ/cm³ et 130 kJ/cm³.

3. Procédé selon la revendication 1 ou 2, **caractérisé en ce que** le matériau luminescent (11) est un halogénure alcalin sous forme d'un cristal ou d'un polycristal amorphe, ou d'un film cristallin ou polycristallin mince déposé sur un support adapté.

4. Procédé selon la revendication 3, **caractérisé en ce que** ledit halogénure alcalin est le fluorure de lithium.

5. Procédé selon la revendication 4, **caractérisé en ce que** *D*_{I} est comprise entre 0,07 J/cm² et 0,12 J/cm², *D*_{A} est comprise entre 0,5 kJ/cm³ et 130 kJ/cm³, et **en ce que** l'énergie spectrale est supérieure à 14 eV.

6. Procédé selon la revendication 1 ou 2, **caractérisé en ce que** le matériau luminescent (11) est sélectionné dans le groupe constitué de : LiF, CdF ou BaFBr:Eu2+ et, plus généralement de tout matériau dit « pourvu d'une luminescence photostimulable », dans lequel des cations Ce3+ ou Eu2+ sont inclus dans des verres silicate, bore, phosphate, halogénure ou dans des mélanges de ces verres.

7. Procédé selon l'une quelconque des revendications 1 à 6, **caractérisé en ce que** la trace spatiale des centres colorés imprimée sur le matériau luminescent (11) et correspondant à ladite image cachée prédéterminée, est déterminée par un masque en transmission (12) placé au contact de ou à distance *d* > 0 du même matériau.

8. Procédé selon l'une quelconque des revendications 1 à 6, **caractérisé en ce que** la trace spatiale des centres colorés imprimée sur le matériau luminescent (11) et correspondant à ladite image prédéterminée, est déterminée par un masque en réflexion (12) placé à distance *d* > 0 du même matériau.

9. Procédé selon la revendication 8, **caractérisé en ce que** l'énergie spectrale est comprise entre 82 eV et 95 eV.

10. Procédé selon la revendication 7 ou 9, **caractérisé en ce que** le dessin correspondant au masque (12) est modifié et/ou projeté à travers tout dispositif optique ou groupe optique, sur le matériau luminescent (11).

11. Procédé selon l'une quelconque des revendications 1 à 10, **caractérisé en ce que** la trace spatiale des centres colorés à créer sur le matériau luminescent (11) est réalisée en utilisant un système optique capable de moduler un faisceau adapté de rayonnement électromagnétique ionisant, en reproduisant point par point l'intensité à imprimer sur le matériau luminescent (11) et correspondant à ladite image prédéterminée.

12. Procédé selon l'une quelconque des revendications 1 à 11, **caractérisé en ce que** la formation point par point de l'image est réalisée en déplaçant un masque en projection ou en transmission ou un masque par contact (12) et en maintenant en place le matériau luminescent (11), ou vice-versa, en déplaçant le matériau luminescent (11) et en maintenant en place le masque (12), qu'il s'agisse d'un masque en projection ou en transmission, ou d'un masque par contact, ou encore en combinant ces deux modes.

13. Procédé selon l'une quelconque des revendications 1 à 12, **caractérisé en ce que** l'image à créer sur le matériau luminescent découle d'une transformée mathématique d'une image originale, ou d'un système de codage quelconque qui associe l'image originale à une image codée, qu'elle soit spatialement continue ou discrète.

14. Procédé selon l'une quelconque des revendications 1 à 13, **caractérisé en ce que**, une fois que l'image désirée a été imprimée, le matériau luminescent (11) est protégé d'une exposition éventuelle à l'abrasion, à l'humidité, au contact avec l'eau ou à d'autres agents de détérioration, par déposition en surface d'un mince film à base de silicium, de nitrure de silicium ou autre matériau transparent et résistant.

15. Procédé anti-contrefaçon basé sur la lithographie de matériaux luminescents, **caractérisé en ce que** les étapes suivantes sont effectuées :
A. irradiation d'un matériau luminescent (11) tel que défini et en accord avec le procédé selon l'une quelconque des revendications 1 à 14,
et **en ce qu'**il comprend les étapes ultérieures supplémentaires de lecture des images invisibles imprimées par la lithographie des matériaux luminescents de l'étape A :
B. envoyer sur les centres colorés un rayonnement lumineux d'excitation compris dans leur bande d'absorption, moyennant quoi les centres colorés émettent une image luminescente ;
C. détecter une telle image luminescente à travers un filtre de lumière adapté pour exclure ledit rayonnement lumineux d'excitation ainsi que d'autres fréquences du bruit éventuelles ;
D. enregistrer, au moyen d'un appareil doté d'une caméra (23) tel que par exemple un microscope ou un téléphone portable, ladite image luminescente ;
E. reconstruire ladite image luminescente sur la base des valeurs des paramètres physiques d'écriture utilisés dans l'étape A ;
F. décoder ladite image luminescente s'il s'agit du résultat du codage d'une image primaire.

16. Matériau luminescent (11) à utiliser à des fins d'anti-contrefaçon avec les procédés selon l'une quelconque des revendications 1 à 15, **caractérisé en ce qu'**il est structuré sous forme d'une série de deux couches minces, ou plus, séparées l'une de l'autre par des matériaux non luminescents, l'épaisseur desdites deux couches ou plus augmentant à partir de la couche faisant face au rayonnement ionisant au cours du processus d'écriture jusqu'à la face opposée dudit matériau structuré luminescent, de sorte que, après l'irradiation par le rayonnement électromagnétique ionisant conformément aux procédés selon l'une quelconque des revendications 1 à 15, l'énergie spectrale du rayonnement ionisant utilisé affecte le rapport de luminescence des différentes couches, et, par conséquent, une marque imprimée avec un rayonnement ionisant ayant une énergie spectrale différente de celle d'une marque d'origine prédéterminée peut être facilement identifiée.
